Europäisches Patentamt

**European Patent Office**

**Office européen des brevets**

(11) Numéro de publication: **0 329 503**
**A1**

## (12) DEMANDE DE BREVET EUROPEEN

(21) Numéro de dépôt: **89400229.4**

(22) Date de dépôt: **27.01.89**

(51) Int. Cl.⁴: **B 62 D 65/00**
**B 23 K 37/04, B 23 P 19/04**

(30) Priorité: **17.02.88 FR 8801855**

(43) Date de publication de la demande:
**23.08.89 Bulletin 89/34**

(84) Etats contractants désignés:
**AT BE DE ES GB IT NL SE**

(71) Demandeur: **RENAULT AUTOMATION**
**8/10 avenue Emile Zola**
**F-92109 Boulogne-Billancourt (FR)**

(72) Inventeur: **Baulier, Dominique**
**22, rue Erlanger**
**F-75116 Paris (FR)**

**Nègre, Bernard**
**31, rue des Envierges**
**F-75020 Paris (FR)**

**Defilippis, Christian**
**1, Chemin des Fontaines**
**F-77166 Evry (FR)**

**Pierdet, Alain**
**5, rue Lionel Terray**
**F-93110 Rosny-sous-Bois (FR)**

**Jami, Jacques**
**2, rue des Poissons**
**F-93600 Aulnay-sous-Bois (FR)**

(74) Mandataire: **Saint Martin, René et al**
**Régie Nationale des Usines Renault 8 & 10, avenue Emile Zola**
**F-92109 Boulogne Billancourt (FR)**

(54) **Procédé et dispositif pour l'interlocalisation des outillages d'une machine d'assemblage de carrosseries.**

(57) Suivant l'invention, ce procédé consiste à départir l'ensemble des moyens intermédiaires pour la mise en place de ces outillages, de la fonction de mise en référence géométrique de ceux-ci, pour confier aux outillages eux-mêmes le soin de s'interlocaliser après isolement temporaire d'une partie de ceux-ci, de leurs moyens de mise en place.

FIG.9

EP 0 329 503 A1

## Description

### PROCEDE ET DISPOSITIF POUR L'INTERLOCALISATION DES OUTILLAGES D'UNE MACHINE D'ASSEMBLAGE DE CARROSSERIES.

La présente invention se rapporte aux lignes capacitaires de carrosseries par exemple de véhicules automobiles. Elle vise plus particulièrement un procédé et un dispositif pour l'interlocalisation des outillages d'une machine d'assemblage de carrossies telle que décrite dans la demande de brevet FR-2.580.973 au nom de la demanderesse.

Elle a pour but de perfectionner cette machine en présentant un système qui permet une interlocalisation de ses outillages, c'est-à-dire qui assure une géométrie parfaite d'une carrosserie de façon autonome.

L'état de la technique ne révèle et ne suggère aucun système semblable.

A cet effet, l'invention a pour objet un procédé pour l'interlocalisation d'outillages qui, suivant une particularité essentielle, consiste à départir l'ensemble des moyens intermédiaires pour la mise en place de ces outillages, de la fonction de mise en référence géométrique de ceux-ci, pour confier aux outillage eux-mêmes le soin de s'interlocaliser après isolement temporaire d'une partie de ceux-ci, de leurs moyens de mise en place.

Ce procédé permet donc d'assurer une géométrie parfaite d'une carrosserie de façon autonome grâce à la fermeture interverrouillée de ces outillages en position de travail en vue de constituer un ensemble indépendant, rigide et facilement interchangeable.

D'autres particularités et avantages de l'invention ressortiront plus clairement de la description qui suit, d'un mode de réalisation préféré, donné à titre d'exemple non limitatif, en référence aux dessins annexés dans lesquels :

- la figure 1 représente une vue longitudinale d'un dispositif pour la mise en oeuvre du procédé conforme à l'invention, sans magasin d'outillages,
- la figure 2 représente une vue transversale de ce dispositif dans magasin d'outillages,
- la figure 3 représente une vue longitudinale de ce dispositif avec un magasin central rotatif,
- la figure 4 représente une vue longitudinale de ce dispositif avec un magasin linéaire à deux emplacements,
- la figure 5 représente une vue longitudinale de ce dispositif avec deux magasin rotatifs avant et arrière,
- la figure 6 représente une vue du dispositif d'interverrouillage supérieur des outillages supérieurs avant et arrière,
- la figure 7 représente une coupe de principe d'un dispositif d'interverrouillage supérieur,
- la figure 8 représente la partie inférieure de positionnement d'un outillage inférieur avec la précision requise par la seule tolérance d'exécution des points de soudage,
- la figure 9 représente un exemple d'application avec un véhicule automobile.

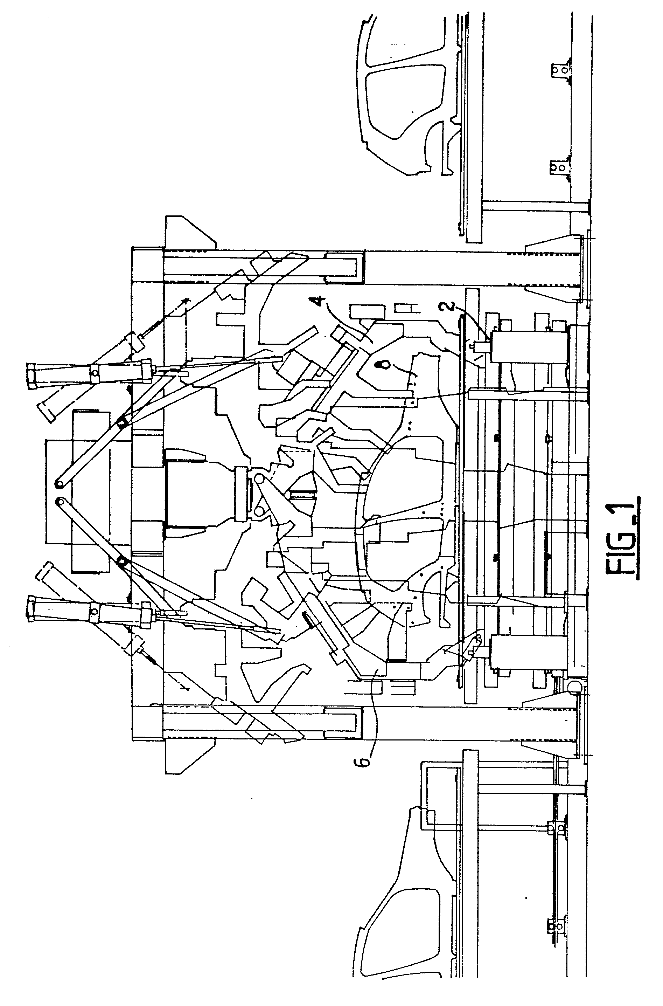

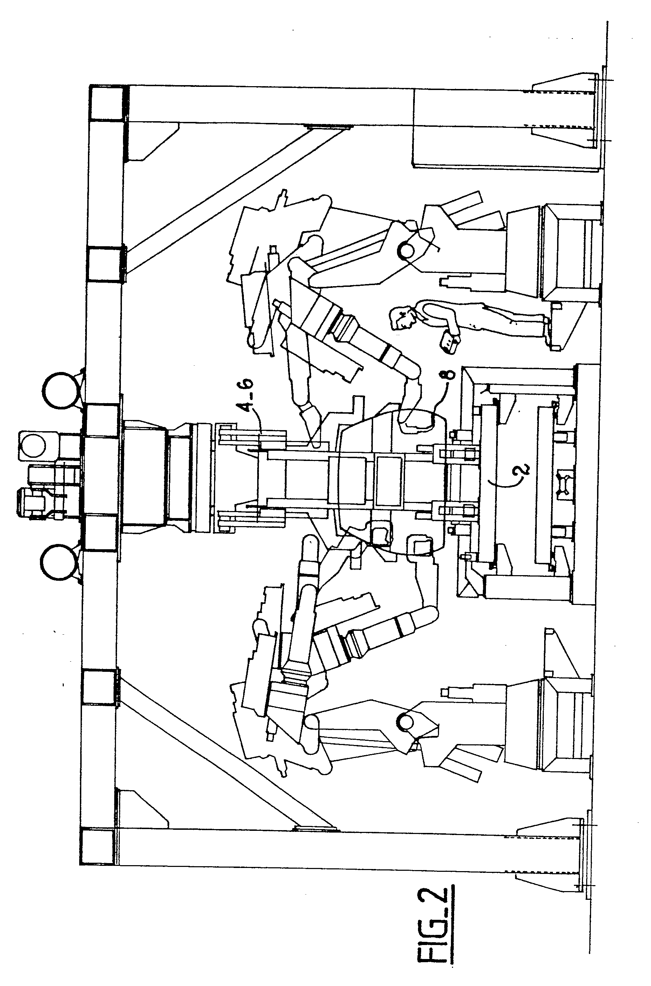

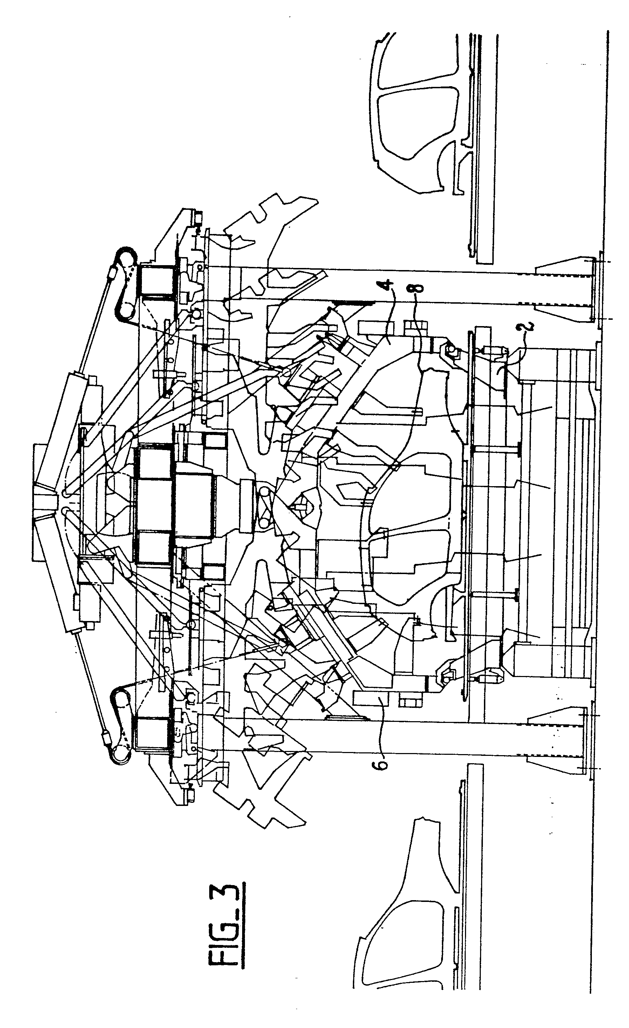

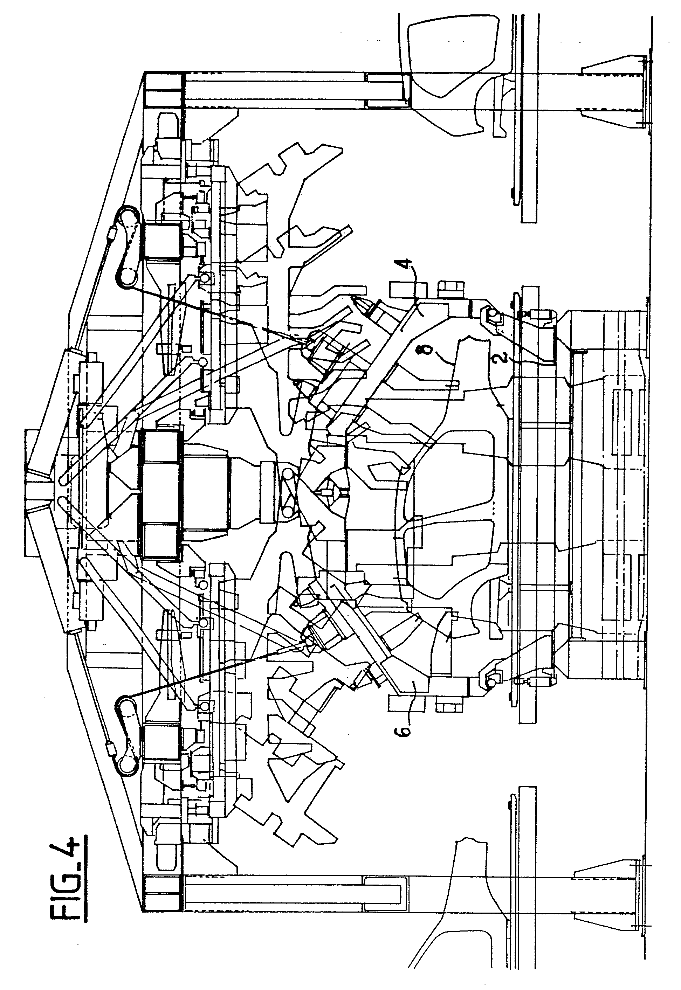

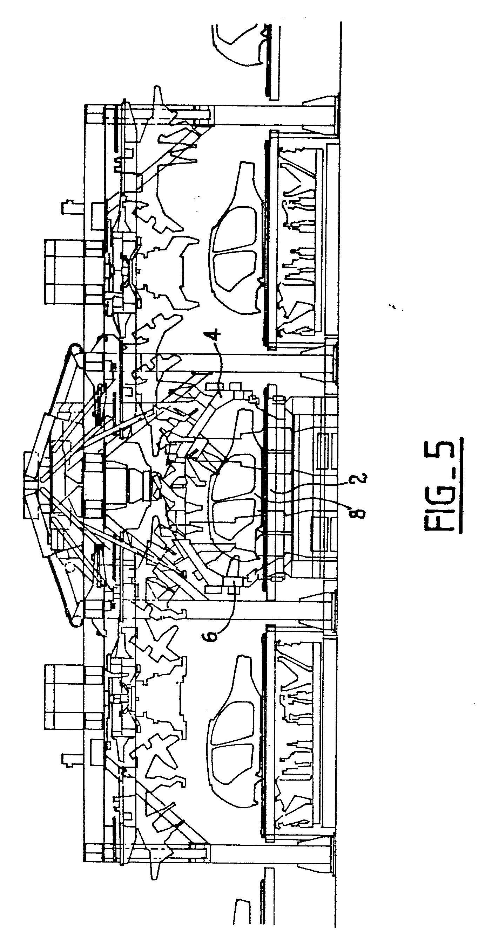

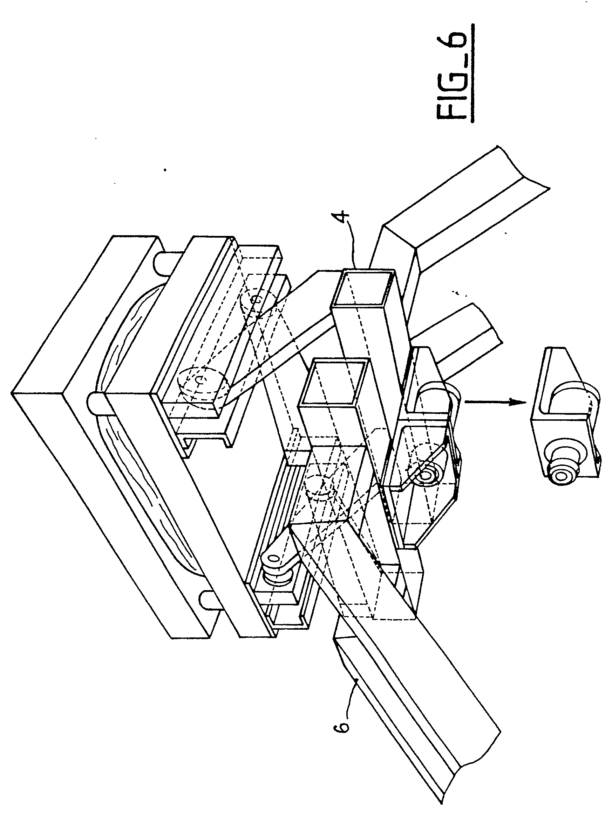

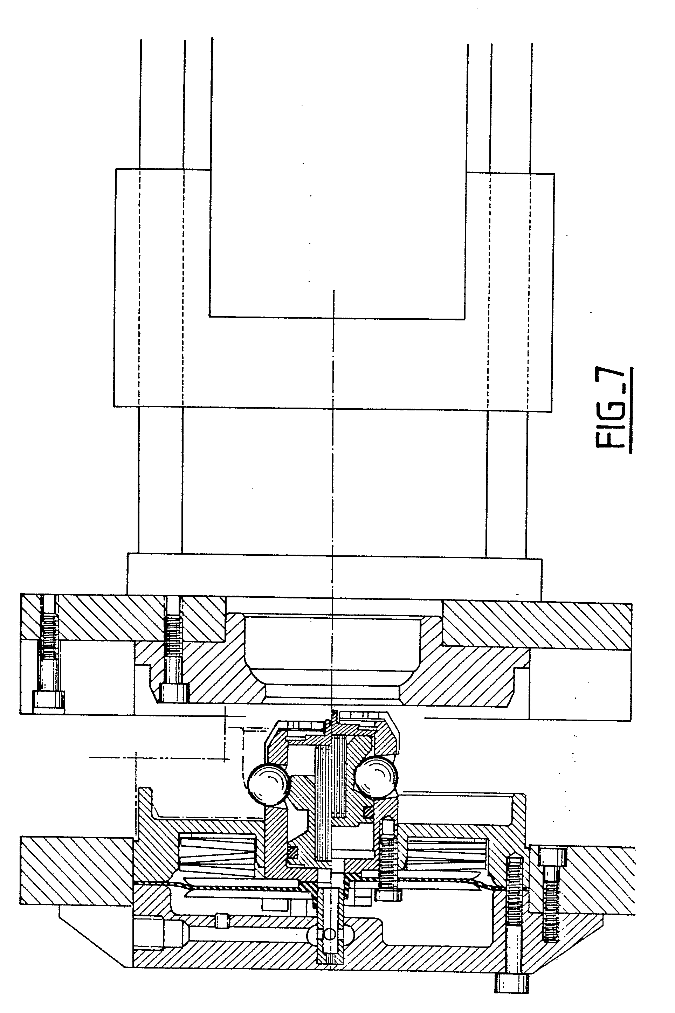

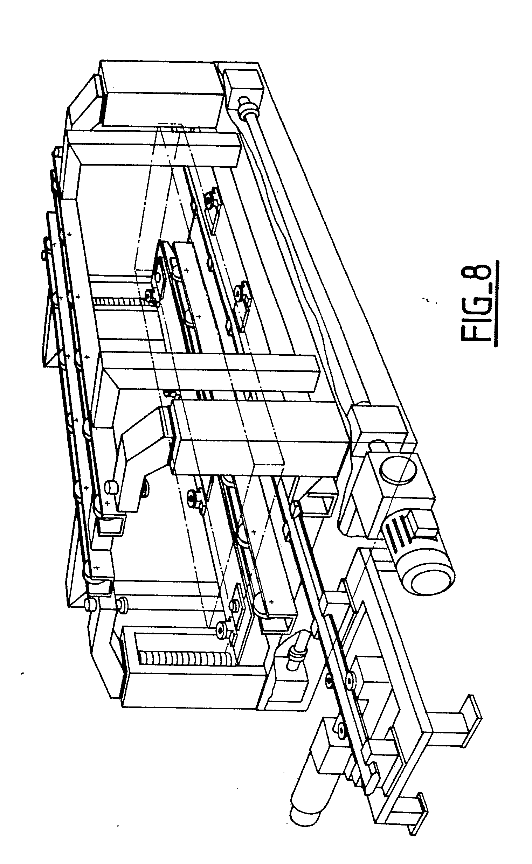

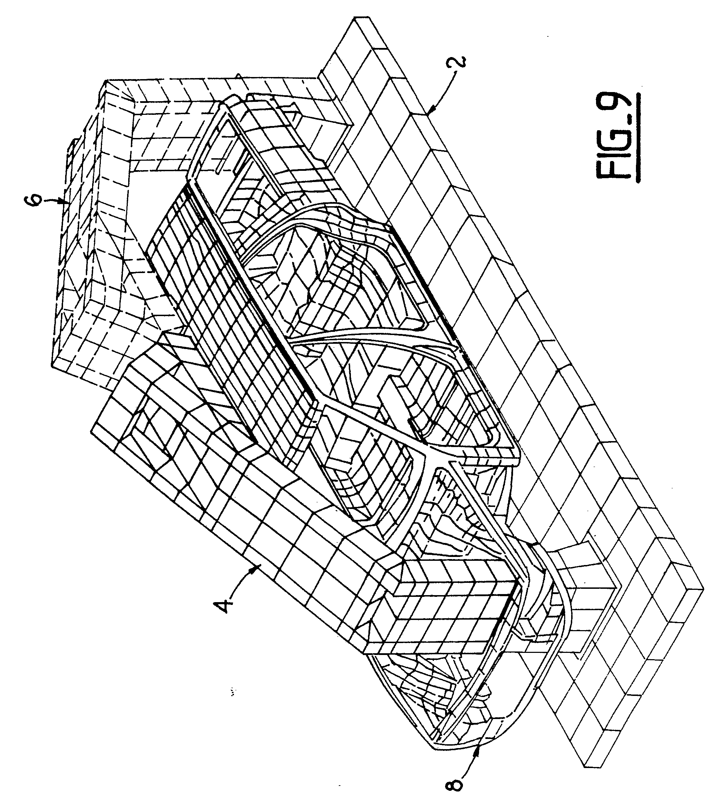

La machine d'assemblage de carrosseries illustrée sur les figures 1 à 9, est architecturée autour de trois types d'outillages différentes :

- un outillage inférieur 2 à positionnement de travail ("pièce prise") bien défini,
- deux outillages supérieurs avant 4 et arrière 6 désolidarisables de la structure de la machine en position de travail ("pièce prise").

Chaque type d'outillage est en outre servi par un dispositif de changement d'outils qui permet de configurer le poste de mise en géométrie en fonction du véhicule en place.

Cette machine d'assemblage fonctionne de la manière suivante :

Une fois le trio d'outillages sélectionné, l'opération de mise en géométrie parfaite d'une carrosserie 8 est réalisée par convergence de ces trois outillages.

- l'outil inférieur 2 sera alors positionne avec la précision requise par la seule tolérance d'exécution des points de soudage.
- les deux outils supérieurs avant 4 et arrière 6 sont, quant à eux rendus flottants à l'approche de leur position d'accostage permettant ainsi un auto-centrage très précis sur l'outillage inférieur 2.

Après interverrouillage des trois outils entre-eux, l'ensemble formera une structure annulaire rigide, indépendante de la structure extérieure, enserrant au plus près la carrosserie 8 dans son plan médian.

Les avantages obtenus se révèlent très significatifs :
- gain de masse sur la structure machine (pas de surdimentionnement des éléments pour diminuer la flèche)
- gain de rigidité de l'anneau géométrique
- répétabilité accrue dans le temps
- autonomie géométrique de l'outillage permettant d'exécuter hors ligne :
. le contrôle des références,
. la mise au point des outillages, et
. la production de petites séries (préséries),
. la programmation et l'optimisation des trajectoires robot.
- gain de temps en réalisation (travail en temps masqué) et en reconversion ligne (diminution du temps d'arrêt). - Préservation de la confidentialité entourant tout nouveau produit automobile, par la possibilité ainsi offerte d'étudier et de réaliser les outillages spécifiques au modèle, séparément du capacitaire machine. - Positionnement du trio d'outils interverrouillés dans le capacitaire machine exécutable dans la seule tolérance de localisation des points de soudure.

### Revendications

1. Procédé pour l'interlocalisation des outillages d'une machine d'asemblage de carrosseries, caractérisé en ce qu'il consiste à départir l'ensemble des moyens intermédiaires pour la mise en place de ces outillages, de la fonction de mise en référence géométrique de ceux-ci, pour confier aux outillages eux-mêmes le soin de s'interlocaliser après isolement temporaire d'une partie de ceux-ci, de leurs moyens de mise en place.

2. Dispositif pour la mise en oeuvre du procédé conforme à la revendication 1, caractérisé en ce que cette machine d'assemblage est architecturée autour de trois types d'outillage différents notamment :
- un outillage inférieur (2) à positionnement de travail ("pièce prise") bien défini,
- un outillage supérieur avant et un outillage supérieur arrière (6) désolidarisables de la structure de cette machine en position de travail ("pièce prise").

3. Dispositif suivant la revendication 2, caractérisé en ce que chaque type d'outillage est servi par un mécanisme de changement d'outils qui permet de configurer le poste de mise en géométrie en fonction du véhicule en place.

FIG.1

EP 0 329 503 A1

FIG.2

FIG_3

FIG_4

EP 0 329 503 A1

FIG_5

6

4

FIG_6

EP 0 329 503 A1

FIG_7

FIG_8

EP 0 329 503 A1

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | US-A-4 670 961  (RENAULT)<br>* Colonne 3, lignes 56-59 *<br>--- | 1-3 | B 62 D  65/00<br>B 23 K  37/04<br>B 23 P  19/04 |
| X | GB-A-2 075 437  (HONDA)<br>* Page 2, lignes 30-60 *<br>--- | 1 | |
| A | US-A-2 779 092  (PROGRESSIVE WELDER SALES CO.)<br>----- | | |

DOMAINES TECHNIQUES
RECHERCHES (Int. Cl.4)

B 23 K
B 62 D

Le présent rapport a été établi pour toutes les revendications

| Lieu de la recherche | Date d'achèvement de la recherche | Examinateur |
|---|---|---|
| LA HAYE | 02-05-1989 | RIS M. |